Europäisches Patentamt

European Patent Office

Office européen des brevets

(11) Veröffentlichungsnummer: **0 306 722 B1**

# EUROPÄISCHE PATENTSCHRIFT

(45) Veröffentlichungstag der Patentschrift: **04.12.91**

(51) Int. Cl.⁵: **A47J 31/057**

(21) Anmeldenummer: **88113046.2**

(22) Anmeldetag: **11.08.88**

(54) Elektrisch betriebenes Gerät zum Zubereiten von Heissgetränken, wie Kaffee, Tee od.dgl. insbesondere Kaffeeautomat.

(30) Priorität: **05.09.87 DE 3729773**

(43) Veröffentlichungstag der Anmeldung:
**15.03.89 Patentblatt 89/11**

(45) Bekanntmachung des Hinweises auf die
Patenterteilung:
**04.12.91 Patentblatt 91/49**

(84) Benannte Vertragsstaaten:
**CH FR GB IT LI NL SE**

(56) Entgegenhaltungen:
**DE-A- 1 517 563**
**DE-A- 3 014 493**
**DE-U- 8 214 035**
**FR-A- 2 188 987**

(73) Patentinhaber: **Robert Krups GmbH & Co. KG**
**Heresbachstrasse 29**
**W-5650 Solingen 19(DE)**

(72) Erfinder: **Mahlich, Gotthard Chr.**
**Am Forsthaus 2**
**W-6242 Kronberg(DE)**
Erfinder: **Borgmann, Michael**
**Dültgenstaler Strasse 14**
**W-5650 Solingen(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2(DE)**

## Beschreibung

Die Erfindung bezieht sich auf ein elektrisch betriebenes Gerät zum Zubereiten von Heißgetränken, wie Kaffee, Tee od.dgl., insbesondere Kaffeeautomat, gemäß dem Oberbegriff des Anspruches 1. Ein derartiges Gerät ist durch die FR-A-21 18 987 bekannt.

Derartige elektrisch betriebene Geräte zum Zubereiten von Heißgetränken, wie Kaffee, Tee od.dgl., die in unterschiedlichen Ausführungsformen bekannt sind, benötigen beim bestimmungsgemäßen Gebrauch die Verwendung von Wasser, welches erhitzt werden muß, um anschließend mit dem Kaffeemehl od.dgl. zusammengebracht zu werden. In aller Regel wird dabei von dem Benutzer eines solchen Gerätes Leitungswasser eingesetzt. Solches Leitungswasser ist chemisch gesehen nicht rein. Vielmehr enthält es neben aufgelösten Gasen eine Reihe von Salzen, die aus Böden, Gestein od.dgl. herausgelöst sind. Zu den Salzen, die im Leitungswasser enthalten sind, gehören u.a. Calciumbikarbonat, Calciumsulfat und Magnesiumbikarbonat. Zusammenfassend bezeichnet man diese als Härte des Wassers. Zur Kennzeichnung der Härte des Wassers ist die Bezeichnung "Härtegrad" in Gebrauch. Je höher der Wert eines Härtegrades ist, umso härter ist das Wasser.

Beim Betreiben elektrisch betriebener Geräte zum Zubereiten von Heißgetränken, wie. Kaffee, Tee od.dgl. spielt die Härte des in den Frischwasserbehälter eingefüllten Wassers eine erhebliche Rolle und zwar deshalb, weil bei einer Erhitzung von Leitungswasser eine Zerlegung des Wassers in einzelne Bestandteile stattfindet. Ein Teil der zerlegten Bestandteile, insbesondere die Karbonate schlagen sich als sogenannter Kesselstein an den wasserführenden Teilen des Kaffeeautomaten od.dgl. nieder. Kesselstein ist aber aus den verschiedensten Gründen unerwünscht. Er wirkt einmal als Wärmeisolator, was sich in einem erhöhten Energieverbrauch niederschlägt. Darüber hinaus können aber Rohre oder durchmesserkleine Leitungen, die vom harten Wasser durchflossen werden, sich mit der Zeit durch Kesselstein völlig zusetzen mit dem Erfolg, daß in der Endphase das Gerät völlig ausfällt.

In der Praxis läßt sich der Kesselstein durch Säuren beseitigen. Sofern es sich um Kupfer, Messing oder ähnliche Metalle handelt, können zum Entfernen von Kesselstein verdünnte Lösungen von Milchsäure oder Essigsäure verwendet werden. Die Hersteller bzw. Verteiler von elektrisch betriebenen Kaffeeautomaten od.dgl. empfehlen daher in aller Regel, innerhalb bestimmter Zeitintervalle ein Entkalken durchzuführen. Die Zeitabstände, in denen ein solches Entkalken durchgeführt werden muß, sind aber von dem Härtegrad des benutzten Leitungswassers abhängig.

Es sind auch sogenannte Entkalkungsanzeigevorrichtungen bekannt, die vielfach auf elektrischer bzw. elektronischer, aber auch auf mechanischer Basis arbeiten. Sie sollen dem Benutzer des Kaffeeautomaten od.dgl. eine Anzeige liefern, die besagt, daß ein Entkalken des Kaffeeautomaten od.dgl. durchgeführt werden muß. Derartige Entkalkungsanzeigevorrichtungen gibt es in verschiedenen Ausführungsformen. So ist durch die DE-OS 3 223 969 ein Kaffeeautomat mit einer Entkalkungsanzeigevorrichtung bekannt geworden. Bei dieser Entkalkungsanzeigevorrichtung wird von der Erkenntnis ausgegangen, daß durch die Ablagerung von Kalk an der Innenwandung des Wasserrohres eines Durchlauferhitzers des Kaffeeautomaten der Wärmeübergang zwischen dem Wassererhitzer und dem Wasser verschlechtert wird, so daß im Wassererhitzer eine Erhöhung der Temperatur eintritt. Die Temperaturerhöhung im Wassererhitzer wird dabei umso größer, je weiter die Verkalkung fortschreitet. Am Wassererhitzer ist ein zusätzlicher Thermostat vorgesehen, der bei einer der fortgeschrittenen Verkalkung entsprechenden Temperaturerhöhung im Durchlauferhitzer anspricht und eine Anzeigeeinrichtung, beispielsweise in Form einer Signallampe betätigt. Das Aufleuchten der Signallampe zeigt dem Benutzer, daß zweckmäßigerweise nunmehr eine Entkalkung vorgenommen werden sollte.

Eine solche Temperaturerhöhung im Wassererhitzer tritt jedoch auch nach einem vollständigen Verkochen des Wassers ein, bevor der genannte Thermostat für die Einhaltung der konstanten Warmhaltetemperatur anspricht. Es ist daher bei der Ausführungsform der Entkalkungsanzeigevorrichtung nach der DE-OS 3 223 969 vorgeschlagen, daß die die fortgeschrittene Verkalkung anzeigende Anzeigevorrichtung mit einem elektronischen Zeitmesser einschaltbar ist, der bei einem entsprechenden verkalkungsbedingten Überschreiten der ohne Verkalkung benötigten, im Zeitmesser gespeicherten Zeit zwischen dem Einschalten des Gerätes und dem ersten Ausschalten des Heizelementes durch den Thermostaten anspricht. Es wird somit von der weiteren Erkenntnis ausgegangen, daß beim Verkalken des Wassererhitzers nicht nur eine Temperaturerhöhung im Wassererhitzer eintritt sondern daß zum Verkochen einer gewissen Wassermenge durch den schlechten Wärmeübergang bei einer Verkalkung mehr Zeit benötigt ist als zum Verkochen der gleichen Wassermenge mit einem Wassererhitzer, an dem noch keine Verkalkung eingetreten ist. Die zum Verkochen der Wassermenge benötigte Zeit verlängert sich proportional der Verkalkung. In dem Zeitmesser wird somit eine Zeit gespeichert, die erforderlich ist, um die vorbestimmte Menge Wasser mit einem verkalkten Wassererhitzer zu verkochen und der Ablauf dieser Zeit wird dann für die Betätigung der Anzeigevorrichtung ausgenutzt. Das Gerät zeigt somit zwar eindeutig und zuverlässig an, wann eine Entkalkung vorgenommen werden soll. Auf der anderen Seite ist dieses Ziel jedoch mit einem erheblichen Aufwand erzielt, der derartige Kaffeeautomaten nicht nur teurer in der Herstellung sondern sie auch störanfälliger macht. Dies alles wegen der zahlreichen Einzelteile, über welche diese Entkalkungsanzeigevorrichtung verfügen muß, um voll funktionsfähig zu sein.

Die Erfindung will daher einen anderen Weg für das Entkalken eines Gerätes zum Zubereiten von Heißgetränken aufzeigen.

Sie geht von der Erkenntnis aus, daß es am besten ist, wenn die wasserführenden Teile eines elektrisch betriebenen Gerätes zum Zubereiten von Heißgetränken, die dem Frischwasserbehälter nachgeschaltet sind, überhaupt nicht mit hartem Wasser in Verbindung kommen. Vielmehr soll diesen Teilen weitgehend entkalktes Wasser zugeführt werden.

Demgemäß liegt der Erfindung die Aufgabe zugrunde, ein elektrisch betriebenes Gerät zum Zubereiten von Heißgetränken, wie Kaffee, Tee od.dgl., insbesondere einen Kaffeeautomat der genannten Art so zu verbessern, daß ein leichtes Anbringen und Abnehmen des Aufnahmeraumes am Gehäuse des Kaffeeautomaten möglich ist, wobei zugleich Teile des Aufnahmeraumes zum Erkennen der Beschaffenheit des Entkalkungsmittels dienen sollen. Dabei soll ein solches Gerät mit einfachen und wohlfeilen Mitteln hergestellt werden können.

Dieses Ziel ist erfindungsgemäß durch die kennzeichnenden Merkmale des Anspruchs 1 erreicht. Die erfindungsgemäße Ausbildung eines elektrisch betriebenen Gerätes zum Zubereiten von Heißgetränken, insbesondere eines Kaffeeautomaten, bringt gegenüber dem Bekannten erhebliche Vorteile. Da das Entkalkungsmittel, bei dem es sich um ein handelsübliches handeln kann, unmittelbar im Bereich des Auslasses des Frischwasserbehälters des Kaffeeautomaten angeordnet ist, erfolgt das Entkalken des Wassers schon unmittelbar beim Austreten aus dem Frischwasserbehälter oder kurz danach. Daher wird dem nachgeschalteten Durchlauferhitzer nur entkalktes Wasser zugeführt. Damit ist die Bildung von Kesselstein an den Wandungen des Wasserrohres des Durchlauferhitzers weitgehend verhindert. Ein Zusetzen des Wasserrohres des Durchlauferhitzers, wie es in der Praxis, insbesondere bei Verwendung von sehr hartem Wasser, erfolgen kann, entfällt.

Auf der anderen Seite hat der Benutzer des erfindungsgemäßen Kaffeeautomaten jederzeit die Möglichkeit, zu kontrollieren, ob das Entkalkungsmittel im Bereich des Auslasses des Frischwasserbehälters noch wirksam ist. Er kann nämlich durch das erwähnte Sichtfenster den jeweiligen Zustand des Entkalkungsmittels erkennen. Sobald vom Benutzer ein Farbumschlag des Entkalkungsmittels festgestellt wird, bedeutet dies für ihn, daß er ein Auswechseln des Entkalkungsmittels · vornehmen muß.

Zweckmäßig ist es, daß das durch den Siebboden des Aufnahmeraumes austretende, enthärtete Wasser über ein Kupplungsrohr dem Wasserrohr des Durchlauferhitzers zugeführt wird. Nach dem Erhitzen gelangt es dann durch den Auslaß des Durchlauferhitzers in ein Steigrohr. Von dort wird es in der Regel durch einen Querkanal in den Bereich des Filters des Kaffeeautomaten geführt, wobei der Auslaß des Querkanales so über dem Filter angeordnet ist, daß er das erhitzte Wasser dem in einer Filtertüte befindlichen Kaffeemehl zuführt. Das fertige Getränk, also im vorliegenden Fall der Kaffee, gelangt dann durch den Auslaß des Filters in eine darunterstehende Auffangkanne, die zweckmäßig auf einem Aufstellfuß des Gehäuses des Kaffeeautomaten steht und zwar im Bereich einer zusätzlichen Warmhalteheizung, die dafür sorgt, daß der in der Auffangkanne befindliche Kaffee warmgehalten wird.

Um eine definierte Verbindung zwischen dem Halter und dem Gehäuse des Kaffeeautomaten zu erzielen, wird vorgeschlagen, die Umfangswand des Aufnahmeraumes über Verbinder mit dem Sichtfenster zu verbinden, wobei die Verbinder und die Begrenzungswandungen des Durchbruches des Gehäuses zusammenwirkende Führungs- und/oder Rastelemente aufweisen. Als Führungselemente können dabei z.B. Nut und Feder eingesetzt werden, wobei es gleichgültig ist, ob die Nut am Halter und die Feder an den Begrenzungswandungen des Durchbruches angeordnet ist oder ob eine umgekehrte Gestaltung gewählt wird. Das Gleiche gilt auch für einzusetzende Rasten und Gegenrasten, die eine in der Technik allgemein gebräuchliche Ausführung aufweisen können.

Nach einem weiteren Vorschlag der Erfindung wird davon ausgegangen, daß es Kaffeeautomaten gibt, bei denen der Frischwasserbehälter entfernbar ist, z.B. um ihn unmittelbar unter einem zu öffnenden Wasserhahn zu füllen. Bei einem solchen entfernbaren Frischwasserbehälter wird vorgeschlagen, diesen ein Kupplungsstück aufweisen zu lassen und im Bereich dieses Kupplungsstückes einen Auslaß für das Wasser vorzusehen, wobei das Kupplungsstück im gekuppelten Zustand mit den Begrenzungswandungen eines Aufnahmeraumes des Gehäuses für ein Entkalkungsmittel zusammenwirkt.

Das Entkalkungsmittel kann in diesem Falle in unterschiedlicher Form in den Aufnahmeraum des Gehäuses eingebracht werden. Bei einer ersten Ausführungsform der Erfindung ist das Entkalkungsmittel in einem eine zerstörbare Umhüllung aufweisenden Wegwerfbehälter untergebracht. Diese zerstörbare Umhüllung kann beispielsweise aus einer dünnen Kunststoff-Folie bestehen, die einmal für den Zusammenhalt des Entkalkungsmittels sorgt, zum anderen aber auch von Gebrauch des Entkalkungsmittels dieses vor äußeren Einflüssen, insbesondere von Feuchtigkeit schützt. Ein solcher Wegwerfbehälter wird beim bestimmungsgemäßen Gebrauch in den Aufnahmeraum des Gehäuses des Kaffeeautomaten eingelegt. Beim Anbringen des Frischwasserbehälters kommt das Kupplungsstück mit dem Wegwerfbehälter in Wirkverbindung. Dabei ist vorgesehen, entweder das Kupplungsstück und/oder den Boden des Aufnahmeraumes der Zerstörung der Umhüllung des Wegwerfbehälters dienende Durchstechspitzen zuzuordnen, d.h. beim Anbringen des Frischwasserbehälters wird die äußere Umhüllung des Wegwerfbehälters zerstört. Dies geschieht zweckmäßig sowohl an der Über- als auch an der Unterseite. Auf diese Weise wird der Wegwerfbehälter mit dem in seinem Inneren befindlichen Entkalkungsmittel so vorbereitet, daß beim bestimmungsgemäßen Gebrauch das Wasser aus dem Frischwasserbehälter durch den Wegwerfbehälter hindurchfließen, dort mit dem Entkalkungsmittel zusammenwirken kann, um danach den Auslaß des Aufnahmeraumes als enthärtetes Wasser zu verlassen.

Bei einer anderen Lösung der Erfindung wird dagegen vorgeschlagen, ein loses Entkalkungsmittel zu benutzen. Dies wird zweckmäßig nicht direkt in den Aufnahmeraum des Gehäuses des Kaffeeautomaten eingebracht sondern in einen zusätzlichen Aufnahmebehälter, der dann seinerseits in den Aufnahmeraum des Gehäuses eingesetzt werden kann. Eine solche Handhabung verlangt zwar die Verwendung eines besonderen Aufnahmebehälters für das Entkalkungsmittel, jedoch lohnt sich dieser geringe Aufwand, weil er dadurch das Entfernen des verbrauchten Entkalkungsmittels wesentlich vereinfacht. Denn das in einem besonderen Aufnahmebehälter befindliche verbrauchte Entkalkungsmittel kann einfach dadurch aus dem Kaffeeautomaten entfernt werden, daß man den Aufnahmebehälter herausnimmt und danach das verbrauchte Entkalkungsmittel ausschüttet und anschließend den Aufnahmebehälter neu füllt. Wenn man dagegen das Entkalkungsmittel direkt in den Aufnahmeraum des Gehäuses einbringen würde, dann könnte sich dies in den Ecken des Aufnahmeraumes festsetzen und ließe sich von dort aus nur schwer entfernen.

Nach einem anderen Vorschlag der Erfindung kann man als Entkalkungsmittel einen gepreßten Körper benutzen, der in seinen Abmessungen und in seiner Gestalt demjenigen eines Aufnahmeraumes angepaßt ist. Darüber hinaus ist schließlich auch die Verwendung einer sogenannten Refillpatrone möglich. Derartige Refillpatronen sind im Handel erhältlich. Sie können in den Aufnahmeraum des Gehäuses des Kaffeeautomaten eingebracht werden. Nach ihrem Verbrauch, der wiederum durch Farbumschlag sichtbar ist, läßt sich eine solche Patrone neu füllen und danach wieder in den Aufnahmeraum zurückbringen.

Nach einem letzten Vorschlag der Erfindung ist es aber auch möglich, den Frischwasserbehälter mit einem Entkalkungsfilter zu einer Baueinheit zusammenzufügen und diese als Wegwerfeinheit auszubilden. In diesem Falle werden minderwertige Werkstoffe zur Herstellung des Frischwasserbehälters mit dem integrierten Entkalkungsfilter benutzt.

In den Figuren der Zeichnungen ist ein Ausführungsbeispiel eines erfindungsgemäßen, elektrisch betriebenen Gerätes zum Zubereiten von Heißgetränken, wie Kaffee, Tee od.dgl., nämlich ein Kaffeeautomat dargestellt und zwar zeigen:

Fig. 1  in Seitenansicht, teilweise im Schnitt, das erfindungsgemäß ausgebildete elektrische Gerät zum Zubereiten von Kaffee, nämlich einen sogenannten Kaffeeautomaten und

Fig. 2  einen Schnitt durch den erfindungsgemäß ausgebildeten Kaffeeautomaten nach der Fig. 1 entlang der Linie II - II der Fig. 1 sowie mit einem Halter für ein Entkalkungsmittel vor seinem Anbringen in einem Durchbruch des Gehäuses des Kaffeeautomaten, was in Richtung des eingezeichneten Pfeiles erfolgt.

Es sei zunächst erwähnt, daß in den Figuren der Zeichnungen nur diejenigen Teile eines elektrisch betriebenen Gerätes zum Zubereiten von Heißgetränken, wie Kaffee, Tee od.dgl. dargestellt sind, die für das Verständnis der Erfindung Bedeutung haben. So fehlen insbesondere die elektrischen Anschlüsse, die zugehörigen Schalt- und Steuereinrichtungen und die Verbindungsleitungen dieser Teile untereinander. Alle in den Figuren der Zeichnungen nicht dargestellten Teile des Gerätes können einen an sich bekannten Aufbau haben und in ebenfalls an sich bekannter Weise miteinander verbunden werden.

Dem Ausführungsbeispiel ist ein in seinem Aufbau grundsätzlich bekanntes elektrisch betriebenes Gerät zum Zubereiten von Heißgetränken, wie Kaffee, Tee od.dgl. zugrundegelegt, welches generell mit 10 bezeichnet ist und kurz Kaffeeautomat genannt wird. Der Kaffeeautomat 10 hat ein Gehäuse 11 aus einem elektrisch isolierenden Werkstoff mit einem im wesentlichen L-förmigen Querschnitt. Der längere der beiden Schenkel eines solchen L's ist dabei als hohler Aufstellfuß 12 gestaltet. Dessen Unterseite dient zugleich als Stellfläche für den Kaffeeautomaten 10. Dieser hat an seiner Unterseite zusätzlich nicht näher bezeichnete Aufstellfüße. Auf der oberen Stirnseite des nicht näher bezeichneten kürzeren Schenkels des Gehäuses 10 ist ein Frischwasserbehälter 13 angeordnet, der nach unten hin durch einen Boden 36 verschlossen ist, in dem sich ein Auslaß 28 befindet. Auf der Unterseite des Bodens 36 sind als Rasten 37 ausgebildete Verbindungselemente vorgesehen, die einstückig angeformt sind. Diese Rasten wirken in bekannter Weise mit Gegenrasten 38 des Gehäuses 11 zusammen. Durch die Verwendung von Rasten 37 und Gegenrasten 38 ist eine lösbare Verbindung des Frischwasserbehälters 13 mit dem Gehäuse 11 des Kaffeeautomaten 10 erzielt.

Der Frischwasserbehälter 13 kann aus einem undurchsichtigen Kunststoff einstückig hergestellt werden. Jedoch hat er in diesem Falle, um den Inhalt erkennen zu können, einen Wasserstandsanzeiger 14, der sich fast über die gesamte Höhe des Frischwasserbehälters 13 erstreckt. Nach oben hin hat der Frischwasserbehälter 13 eine nicht näher bezeichnete Öffnung zum Einfüllen des Wassers. Diese ist durch einen abnehmbaren Deckel 15 verschlossen.

Seitlich neben dem oberen Bereich des Frischwasserbehälters 13 hat der Kaffeeautomat 10 einen Filter 16, der trichterförmig gehalten ist, weil er in seinem nicht näher bezeichneten Aufnahmeraum in bekannter Weise eine Filtertüte aufnimmt, in die das Kaffeemehl einbringbar ist, welches zur Herstellung des Heißgetränkes, nämlich des Kaffees, benutzt wird. Der Filter 16 ist mit einem Handgriff versehen, mit dessen Hilfe er aus einem oberen Teil des Kaffeeautomaten 10 entfernt werden kann, beispielsweise um den Filter beschicken zu können.

Das fertige Getränk läuft aus dem Filter in eine Auffangkanne 17, die in aller Regel aus einem durchsichtigen, also glasklaren Werkstoff gefertigt ist und an ihrer Umfangsfläche einen Handgriff 18 aufweist. Die obere große Öffnung der Auffangkanne 17 ist durch einen Deckel 19 verschlossen, der in seiner Mitte liegend einen Durchbruch zum Durchfluß des fertigen Kaffees in die Auffangkanne 17 aufweist. Der Boden der Auffangkanne 17 ruht auf dem Aufstellfuß 12. Dieser hat auf seiner der Auffangkanne 17 zugekehrten Seite einen ringförmigen erhöhten Aufstellrand 39, der zugleich eine nicht näher bezeichnete Öffnung in der Oberseite des Abstellfußes 12 abdeckt. Diese Öffnung ist durch eine Abdeckplatte 21 verschlossen, die entfernt werden kann.

Unterhalb der Abdeckplatte 21 liegend ist in dem Hohlraum des Aufstellfußes 12 ein Durchlauferhitzer 20 an sich bekannter Bauart untergebracht.

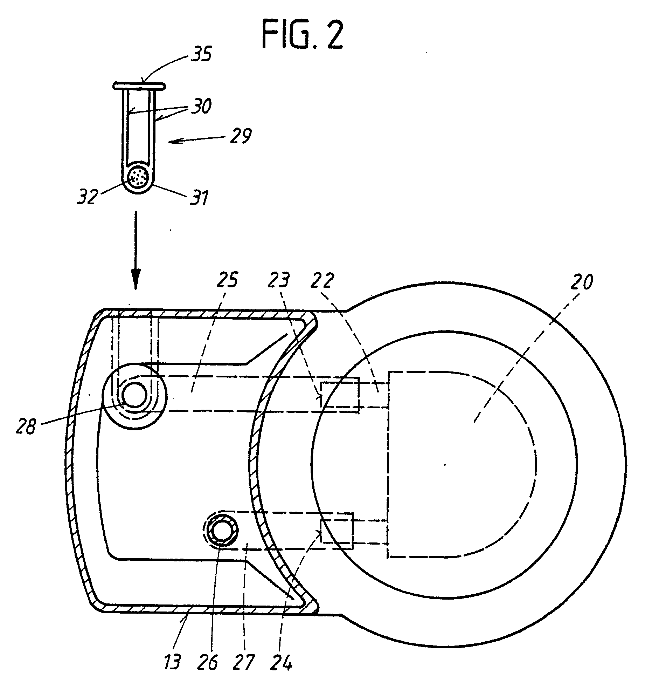

Zu dem Durchlauferhitzer 20 gehört ein Wasserrohr 22 mit einem im Querschnitt runden Durchlaß. Das Wasserrohr 22 ist - wie die Fig. 2 am besten erkennen läßt - U-förmig gestaltet. Das eine - in der Fig. 2 obere - Ende des Wasserrohres 22 hat einen Einlaß 23, in den das aus dem Frischwasserbehälter 13 kommende Wasser einströmt. Dies geschieht unter Benutzung eines I. Kupplungsrohres 25, welches das den Einlaß 23 aufweisende Ende des Wasserrohres 22 mit dem Auslaß 28 des Frischwasserbehälters 13 verbindet. Dies geschieht jedoch in noch zu schildernder Weise unter Zwischenschaltung eines Entkalkungsmittels.

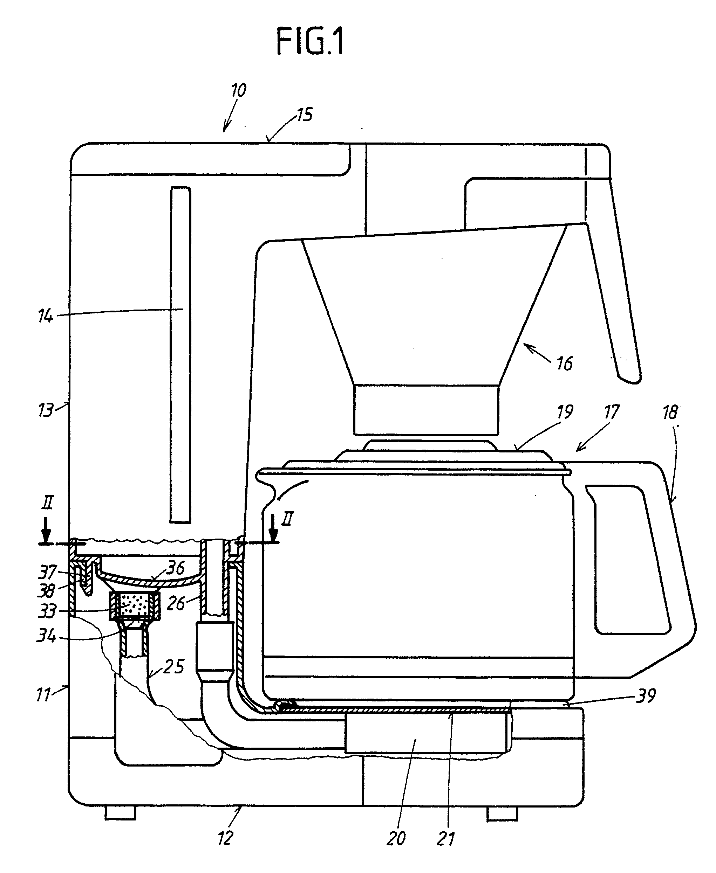

Das andere Ende des Wasserrohres 22, nämlich das in der Fig. 2 untenliegende, hat eine Auslaßöffnung 24, die unter Benutzung eines II. Kupplungsrohres 27 mit dem nach unten hin offenen Ende eines Steigrohres 26 verbunden ist. Das Steigrohr 26 ist in vertikaler Richtung angeordnet, hat jedoch einen horizontal verlaufenden, in der Fig. 1 nicht sichtbaren Querarm, dessen Auslaß oberhalb der Öffnung des Trichters 16 liegt, so daß das erhitzte Wasser direkt in das in einer Filtertüte befindliche Kaffeemehl gelangen kann.

In der Fig. 2 der Zeichnung ist der Einfachheit halber nicht dargestellt, daß zu dem Durchlauferhitzer 20 auch ein elektrisches Rohr gehört, das ebenfalls U-förmig gestaltet ist und das innenliegend flächig an den inneren Begrenzungswandungen des Wasserrohres 22 anliegt. Die beiden Teile, nämlich Wasserrohr und elektrisches Heizrohr, sind durch bekannte Verbindungsmittel, wie Löt- oder Schweißverbindungen miteinander zu einer Einheit verbunden. Das elektrische Heizrohr ist ebenso wenig dargestellt wie die zu ihm führenden elektrischen Versorgungsleitungen. Alle diese Teile können eine an sich bekannte Ausbildung aufweisen.

Bisher ist beim bestimmungsgemäßen Gebrauch des Kaffeeautomaten 10 das Wasser aus dem Frischwasserbehälter 13 durch einen Auslaß unmittelbar durch das I. Kupplungsrohr 25 in den Einlaß 23 des Wasserrohres 22 geströmt, wurde dort durch die benachbarte elektrische Heizung erwärmt, um schließlich als erhitztes Wasser durch das Steigrohr 26 hindurch in den Bereich des Filters 16 zu gelangen. Bei dieser Art des Betriebes des Kaffeeautomaten 10 konnte es vor allem dann, wenn sehr hartes Wasser benutzt wurde, zu einer allmählichen Verkalkung des Wasserrohres 22 kommen. Es hat sich nämlich Kesselstein an den Innenwandungen des Wasserrohres festgesetzt mit dem Erfolg, daß die zur Verfügung stehende Querschnittsfläche für das zu erhitzende Wasser immer kleiner wurde. Dadurch hat sich nicht nur der Energieverbrauch vergrößert sondern auch die Arbeitszeit verlängert. Um hier Abhilfe zu schaffen, wird erfindungsgemäß im Bereich des Auslasses 28 des Frischwasserbehälters 13 des Kaffeeautomaten 10 ein Entkalkungsmittel 33 angeordnet. Dies geschieht im dargestellten Ausführungsbeispiel in folgender Art und Weise:

Der kürzere Schenkel des im Querschnitt L-förmigen Gehäuses 11 hat in seinem oberen Bereich liegend einen nicht näher bezeichneten Durchbruch, in den der in Fig. 2 dargestellte Halter 29 eingeführt werden kann. Das Einführen des Halters in das Gehäuse 11 erfolgt in Richtung des eingezeichneten Pfeiles der Fig. 2. Daraus ergibt sich, daß der aus einem Kunststoff gefertigte Halter 29 an seinem einen Ende einen Aufnahmeraum 32 aufweist, der von einer in Draufsicht gesehen kreisringförmig gestalteten Umfangswand 31 umgeben ist und der ein Entkalkungsmittel 33 aufnimmt. Dieses ist im gewählten Ausführungsbeispiel ein formbeständiger Körper, der in seiner Gestalt und seinen Abmessungen denjenigen des Aufnahmeraumes 32 des Halters 29 angepaßt ist, d.h. das Entkalkungsmittel 33 kann als Ganzes in den Aufnahmeraum 32 eingebracht werden. Der Halter 29 hat zwei in Abstand parallel zueinander verlaufende Verbinder 30, die an ihrem dem Aufnahmeraum 32 gegenüberliegenden Ende ein Sichtfenster 35 aufweisen. Dieses kann für sich hergestellt und nachträglich mit den Verbindern 30 vereinigt werden, beispielsweise durch Kleben. Zur Herstellung des Sichtfensters können glasklare Kunststoffe eingesetzt werden. Dies gilt auch mindestens für denjenigen Bereich der Umfangswand 31, der dem Sichtfenster 35 zugekehrt ist.

Der Halter 29 wird in Richtung des Pfeiles der Fig. 2 in das Gehäuse 11 eingeführt. Um dabei eine gute Führung des Halters in dem Gehäuse zu erreichen, hat dieser Führungselemente, die mit Gegenführungen des Gehäuses zusammenwirken. Diese können in bekannter und daher nicht dargestellter Weise z.B. als Nut und Feder ausgebildet sein. Daneben ist aber auch die Verwendung von Rasten oder Gegenrasten möglich, damit der Halter 29 seine Lage in dem Gehäuse beibehält. In dieser, in der Fig. 1 dargestellten Lage liegt das Entkalkungsmittel 33 unmittelbar hinter dem Auslaß 28 des Frischwasserbehälters, so daß das Wasser des Frischwasserbehälters gezwungen wird, das Entkalkungsmittel 33 zu durchlaufen, ehe es den Siebboden 34 des Aufnahmeraumes verläßt, um durch das l. Kupplungsrohr 25 hindurch in den Einlaß 23 des Wasserrohres 22 zu gelangen. Auf diese Weise wird dafür gesorgt, daß dem Wasserrohr 22 des Durchlauferhitzers 20 ausschließlich enthärtetes Wasser zugeführt wird, so daß es nicht zu der befürchteten Kesselsteinbildung an den Innenwandungen des Wasserrohres 22 kommen kann.

Auf der anderen Seite hat der Benutzer jederzeit die Möglichkeit, festzustellen, ob das Entkalkungsmittel 33 im Aufnahmeraum 32 des Halters 29 noch wirksam ist. Die Unwirksamkeit des Entkalkungsmittels 33 kann durch einen Farbumschlag desselben festgestellt werden. Sobald dieser vorliegt, muß der Benutzer des Kaffeeautomaten 10 ein Auswechseln des Entkalkungsmittels 33 vornehmen.

Das Entkalkungsmittel 33 kann auch lose in den Aufnahmeraum 32 des Halters 29 eingebracht werden. Dies geschieht zweckmäßig nicht direkt in den Aufnahmeraum sondern unter Benutzung eines besonderen Aufnahmebehälters, der seinerseits in den Aufnahmeraum 32 eingesetzt werden kann. Dieser hat ebenfalls einen Siebboden, der dem Siebboden 34 des Aufnahmeraumes 32 nachgeschaltet ist. Die Verwendung eines Aufnahmebehälters für ein loses Entkalkungsmittel ist für das Entfernen nach Verbrauch desselben vorteilhaft.

Daneben ist es aber auch möglich, das Entkalkungsmittel in eine sogenannte Refillpatrone einzusetzen und diese dann im Bereich des Aufnahmeraumes bzw. des Auslasses 28 des Frischwasserbehälters 13 anzuordnen. Eine solche Refillpatrone kann bei Bedarf immer wieder mit einem Entkalkungsmittel gefüllt werden. Derartige Refillpatronen sind im Handel erhältlich und zwar in unterschiedlichen Größen, so daß die jeweils geforderte Größe ausgewählt werden kann.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Insbesondere kann die Erfindung auch bei anderen an sich bekannten Kaffeeautomaten benutzt werden. Diese können auch mit unterschiedlichen Durchlauferhitzern ausgebildet sein. Man kann das Entkalkungsmittel auch in einen Wegwerfbehälter einfüllen.

Dieser Werkstoff kann eine Umhüllung aus einem zerstörbaren Werkstoff, beispielsweise eine zerstörbare Folie aufweisen. In diesem Falle schützt die Umhüllung das Entkalkungsmittel im Inneren des Wegwerfbehälters vor dem Eindringen von Feuchtigkeit, so lange es nicht benutzt wird bzw. so lange es gelagert oder transportiert wird. Bringt man einen solchen Wegwerfbehälter dagegen in den Aufnahmeraum des Halters 29 ein, so wird die Umhüllung zerstört. Dies kann von beiden Seiten her, also von der Ober- und der Unterseite erfolgen, beispielsweise dadurch, daß man an dem zugehörigen Bereich des entfernbaren Frischwasserbehälters einerseits und im Bereich des Siebbodens 34 andererseits Durchstechspitzen anbringt, die beim Zusammenkoppeln des Frischwasserbehälters 13 mit dem Gehäuse 11 die Umhüllung durchdringen und diese vielfach zerstören. Dadurch wird der Weg zum Durchfluß des Wassers frei.

Man kann aber auch nach einem anderen Vorschlag der Erfindung den Frischwasserbehälter mit einem integrierten Entkalkungsfilter als Wegwerfeinheit ausbilden. In diesem Falle ist im unteren Bereich des Frischwasserbehälters ein von oben her zugänglicher Aufnahmeraum für ein Entkalkungsmittel vorgesehen. Die gesamte wegwerfbare Baueinheit wird zweckmäßig aus einem billigen Kunststoff gefertigt. Auf die Verwendung eines Wasserstandsanzeigers kann man dabei verzichten, wenn man zur Herstellung der Wegwerfeinheit einen durchsichtigen Kunststoff benutzt.

Bezugszeichenliste:

| 10 | - Kaffeeautomat |
|----|-----------------|
| 11 | - Gehäuse (von 10) |
| 12 | - Aufstellfuß |
| 13 | - Frischwasserbehälter |
| 14 | - Wasserstandsanzeiger (von 13) |
| 15 | - abnehmbarer Deckel (von 13) |
| 16 | - Filter |
| 17 | - Auffangkanne |
| 18 | - Handgriff (von 17) |
| 19 | - Deckel (von 17) |
| 20 | - Durchlauferhitzer |
| 21 | - Abdeckplatte |
| 22 | - Wasserrohr |
| 23 | - Einlaßöffnung (von 22) |
| 24 | - Auslaßöffnung (von 22) |
| 25 | - I. Kupplungsrohr |
| 26 | - Steigrohr |
| 27 | - II. Kupplungsrohr |
| 28 | - Auslaß (von 13) |
| 29 | - Halter |
| 30 | - Verbinder (an 29) |
| 31 | - Umfangswand |
| 32 | - Aufnahmeraum |
| 33 | - Entkalkungsmittel |
| 34 | - Siebboden (von 32) |
| 35 | - Sichtfenster |
| 36 | - Boden (von 13) |
| 37 | - Rast (an 36) |
| 38 | - Gegenrast (an 11) |
| 39 | - Aufstellrand (für 17) |

## Patentansprüche

1.  Elektrisch betriebenes Gerät zum Zubereiten von Heißgetränken, wie Kaffee, Tee od.dgl., insbesondere Kaffeeautomat (10), mit einem eine Einfüllöffnung aufweisenden Frischwasserbehälter (13), dessen Auslaß (28) mit einem elektrisch betriebenen Durchlauferhitzer (20) verbunden ist, aus dem das erhitzte Wasser in ein Steigrohr (26) gelangt, dessen Auslauf über einem Filter (16) angeordnet ist, der das Kaffeemehl in einer Filtertüte aufnimmt und unter dem eine Auffangkanne (17) angeordnet ist, wobei unterhalb des Auslasses (28) des Frischwasserbehälters (13) des Kaffeeautomaten (10) ein Aufnahmeraum für ein Entkalkungsmittel (33) angeordnet ist, dessen Boden als Siebboden (34) ausgebildet ist, durch welches das enthärtete Wasser dem Durchlauferhitzer (20) zuführbar ist, **dadurch gekennzeichnet,** daß das Entkalkungsmittel zum Erkennen seines Farbzustandes (Farbumschlages) von außen sichtbar ist, wobei der Aufnahmeraum (32) eine wenigstens bereichsweise durchsichtige Umfangswand (31) aufweist, die im Sichtbereich eines Sichtfensters (35) liegt, und daß der Aufnahmeraum (32) für das Entkalkungsmittel (33) an dem einen Ende eines Halters (29) angeordnet ist, der einen Durchbruch des Gehäuses (11) des Kaffeeautomaten (10) durchgreift und an seinem anderen Ende das Sichtfenster (35) trägt.

2.  Kaffeeautomat nach einem oder mehreren der vorangehenden Ansprüche, dadurch gekennzeichnet, daß das durch den Siebboden (34) des Aufnahmeraumes (32) austretende enthärtete Wasser über ein Kupplungsrohr (25) dem Wasserrohr (22) des Durchlauferhitzers (20) zuführbar ist und von dort erhitzt in das Steigrohr (26) gelangt, von wo es dem Kaffeemehl im Filter (16) zuführbar ist und als zubereiteter Kaffee in die Auffangkanne (17) gelangt.

3.  Kaffeeautomat nach einem oder mehreren der vorangehenden Ansprüche, dadurch gekennzeichnet, daß die Umfangswand (31) des Aufnahmeraumes (32) über Verbinder (30) mit dem Sichtfenster (35) verbunden ist und daß die Verbinder (30) und die Begrenzungswandungen des Durchbruches des Gehäuses (11) zusammenwirkende Führungs-und/oder Rastelemente aufweisen.

4.  Kaffeeautomat nach Anspruch 1 mit einem entfernbaren Frischwasserbehälter, dadurch gekennzeichnet, daß der entfernbare Frischwasserbehälter (23) im Bereich eines Kupplungsstückes einen Auslaß für das Wasser aufweist und daß das Kupplungsstück im gekuppelten Zustand mit den Begrenzungswandungen eines Aufnahmeraumes des Gehäuses für ein Entkalkungsmittel zusammenwirkt.

5.  Kaffeeautomat nach Anspruch 1 und 6, dadurch gekennzeichnet, daß das Entkalkungsmittel (33) in einem eine zerstörbare Umhüllung aufweisenden Wegwerfbehälter untergebracht und dieser in den Aufnahmeraum des Gehäuses einlegbar ist, wobei das Kupplungsstück und/oder der Boden des Aufnahmeraumes der Zerstörung der Umhüllung dienende Durchstechspitzen aufweisen.

6. Kaffeeautomat nach Anspruch 1 und 6, dadurch gekennzeichnet, daß das Entkalkungsmittel in einen Aufnahmebehälter einfüllbar und dieser in einen Aufnahmeraum des Gehäuses einsetzbar ist.

7. Kaffeeautomat nach einem oder mehreren der vorangehenden Ansprüche, dadurch gekennzeichnet, daß das Entkalkungsmittel als gepreßter, in seinen Abmessungen einem Hohlraum angepaßter Formkörper ausgebildet ist.

8. Kaffeeautomat nach einem oder mehreren der vorangehenden Ansprüche, dadurch gekennzeichnet, daß der Frischwasserbehälter (13) mit einem integrierten Entkalkungsfilter als Wegwerfeinheit ausgebildet ist.

9. Kaffeeautomat nach einem der Ansprüche 1 bis 3, dadurch gekennzeichnet, daß das Entkalkungsmittel in einer in den Aufnahmeraum (32) einbringbaren Refillpatrone angeordnet ist.

**Claims**

1. An electrically operated appliance for preparing hot beverages such as coffee, tea or the like, in particular an automatic coffee-making machine (10), comprising a fresh water container (13) which has a filling opening and the outlet (28) of which is connected to an electrically operated continuous-flow heater (20) from which the heated water passes into a riser pipe (26) whose outlet is arranged above a filter (16) which accommodates the ground coffee in a filter bag and below which is disposed a collecting pot (17), wherein disposed beneath the outlet (28) of the fresh water container (13) of the automatic coffee machine (10) is a receiving space for a deliming agent (33), the bottom of which is in the form of a filter bottom (34) through which the softened water can be passed to the continuous-flow heater (20), characterised in that the deliming agent is visible from the outside for the purposes of detecting its colour condition (change of colour), wherein the receiving space (32) has a peripheral wall (31) which is transparent at least in a region thereof and which is disposed in the sight region of a sight window (35), and that the receiving space (32) for the deliming agent (33) is arranged at the one and of a holder (29) which passes through an opening in the casing (11) of the automatic coffee-making machine (10) and which carries the sight window (35) at its other end.

2. An automatic coffee-making machine according to claim 1 characterised in that the softened water which issues through the filter bottom (34) of the receiving space (32) can be passed by way of a coupling pipe (25) to the water pipe (22) of the continuous-flow heater (20) and from there passes in a heated condition into the riser pipe (26) from which it can be passed to the ground coffee in the filter (16) and passes as prepared coffee into the collecting pot (17).

3. An automatic coffee-making machine according to one or more of the preceding claims characterised in that the peripheral wall (31) of the receiving space (32) is connected to the sight window (35) by way of connectors (30) and that the connectors (30) and the boundary walls of the opening in the casing (11) have co-operating guide and/or retaining elements.

4. An automatic coffee-making machine according to claim 1 with a removable fresh water container characterised in that in the region of a coupling portion the removable fresh water container (23) has an outlet for the water and that in the coupled condition the coupling portion cooperates with the boundary walls of a receiving space in the casing for a deliming agent.

5. An automatic coffee-making machine according to claim 1 and claim 6 characterised in that the deliming agent (33) is disposed in a throwaway container having a destructible wrapping and the container can be introduced into the receiving space of the casing, wherein the coupling portion and/or the bottom of the receiving space have perforating points for destroying the wrapping.

6. An automatic coffee-making machine according to claim 1 and claim 6 characterised in that the deliming agent can be introduced into a receiving container and the latter can be fitted into a receiving space in the casing.

7. An automatic coffee-making machine according to one or more of the preceding claims characterised in that the deliming agent is in the form of a pressed shaped body which is adapted in its dimensions to a hollow space.

8. An automatic coffee-making machine according to one or more of the preceding claims characterised in that the fresh water container (13) is formed as a throw-away unit, with an intergrated deliming filter.

9.  An automatic coffee-making machine according to one of claims 1 to 3 characterised in that the deliming agent is arranged in a refill cartridge which can be fitted into the the receiving space (32).

**Revendications**

1.  Appareil électrique pour préparer des boissons chaudes telles que café, thé ou autres, en particulier cafetière (10), avec un réservoir d'eau froide (13) comportant une ouverture de remplissage, la sortie (28) de celui-ci étant reliée à un chauffe-eau électrique rapide (20) d'où l'eau chauffée parvient à un tube ascendant (26) dont la décharge est disposée au-dessus d'un filtre (16) qui reçoit la poudre de café dans un cornet de papier filtre et sous lequel est placé un récipient de réception (17), tandis que sous la sortie (28) du réservoir d'eau froide (13) de la cafetière (10) est disposée une chambre de logement (32) pour un détartrant (33) dont le fond est constitué par un tamis (34) à travers lequel l'eau adoucie est amenée au chauffe-eau (20), caractérisé en ce que le détartrant pour le repérage de son état de coloration (changement de coloration) est visible de l'extérieur, la chambre de réception (32) possédant une paroi (31) au moins localement transparente, qui se trouve dans le champ de visibilité d'une fenêtre témoin (35), et en ce que la chambre (32) de logement du détartrant (33) est disposée à une extrémité d'un support (29) qui est engagé dans un décrochement du boitier (11) de la cafetière (10) et qui porte à son autre extrémité la fenêtre témoin (35).

2.  Cafetière selon la revendication précédente, caractérisée en ce que l'eau adoucie ayant traversé le tamis (34) de la chambre (32) est amenée par un tube de connexion (25) au tuyau d'eau (22) du chauffe-eau et de là parvient chaude dans le tube ascendant (26), d'où elle est conduite à la poudre de café dans le filtre (16) et arrive ensuite comme café préparé dans le récipient de réception (17).

3.  Cafetière selon l'une au moins des revendications précédentes, caractérisée en ce que la paroi (31) de la chambre de logement (32) est reliée à la fenêtre-témoin (35) par une connexion (30) et en ce que la connexion (30) et la paroi délimitant le décrochement du boîtier (11) comportent des éléments de guidage et/ou de fixation coopérant entre eux.

4.  Cafetière selon la revendication 1, avec un réservoir d'eau froide amovible, caractérisée en ce que le réservoir d'eau froide amovible (23) comporte au voisinage d'un organe d'accouplement une sortie pour l'eau et en ce que l'organe d'accouplement coopère en condition d'assemblage avec la paroi délimitant une chambre dans le boîtier pour le logement d'un détartrant.

5.  Cafetière selon les revendications 1 et 4, caractérisée en ce que le détartrant (33) est disposé dans un emballage jetable comportant une enveloppe destructible et en ce que ce dernier est logeable dans la chambre du boîtier, l'organe d'accouplement et/ou le fond de la chambre comportent des pointes servant à la destruction de l'enveloppe.

6.  Cafetière selon les revendications 1 et 5, caractérisée en ce que le détartrant est introduit dans un réceptacle et en ce que celui-ci est engagé dans une chambre de logement du boîtier.

7.  Cafetière selon l'une au moins des revendications précédentes, caractérisée en ce que le détartrant est réalisé sous la forme d'un corps comprimé adapté dans ses dimensions à un logement.

8.  Cafetière selon l'une au moins des revendications précédentes, caractérisée en ce que le réservoir d'eau froide (13) est réalisé avec un filtre anti-calcaire intégré sous la forme d'une unité jetable.

9.  Cafetière selon l'une des revendications 1 à 3, caractérisée en ce que le détartrant est disposé dans une cartouche de recharge qui peut être placée dans la chambre de logement (32).

FIG.1

# FIG. 2